# FASCICULE DE BREVET EUROPEEN

(11) **EP 1 850 088 B1**
(45) Date de publication et mention de la délivrance du brevet: **16.09.2015**
(21) Numéro de dépôt: 07290518.5
(22) Date de dépôt: 25.04.2007
(51) Int. Cl.: G01B 7/06

(54) **Mesure des épaisseurs de paroi, notamment d'aube, par courants de Foucault**
Messung von Wanddicken, insbesondere von Laufradschaufeln, mit Hilfe von Wirbelströmen
Wall thickness measurement, in particular of a vane, by eddy currents

(30) Priorité: 26.04.2006 FR 0651493
(43) Date de publication de la demande: 31.10.2007
(73) Titulaire: SNECMA, 75015 Paris (FR); CENTRE NATIONAL DE LA RECHERCHE SCIENTIFIQUE -CNRS-, 75016 Paris (FR)
(72) Inventeur: Joubert, Pierre-Yves, 75012 Paris (FR); Lespinet, Olivier, 91100 Corbeil Essonnes (FR); Le Bihan, Yann, 94230 Cachan (FR); Mikic, Alexandra, 92250 La Garenne Colombes (FR)
(74) Mandataire: David, Daniel

(56) Documents cités:
- EP-A- 1 167 917
- WO-A-98/02714
- WO-A2-03/073040
- LE BIHAN Y ET AL: "Wall thickness evaluation of single-crystal hollow blades by eddy current sensor" NDT & E INTERNATIONAL, BUTTERWORTH-HEINEMANN, OXFORD,, GB, vol. 34, no. 5, juillet 2001 (2001-07), pages 363-368, XP004249269 ISSN: 0963-8695

## Description

La présente invention concerne le domaine des turbomachines et vise un dispositif de mesure des épaisseurs de parois de pièces creuses telles que des aubes, notamment de turbine, par courants de foucault.

Les aubes de turbine haute pression présentent des géométries de plus en plus complexes avec notamment des canalisations internes pour en assurer le refroidissement par circulation d'air, des cloisons internes et une courbure dite variable. Après fabrication, l'épaisseur des parois externes, au droit des canalisations doit être évaluée par un procédé non destructif afin de s'assurer de leur solidité mécanique. L'incertitude de la mesure doit être faible. Par exemple pour des épaisseurs de parois allant de 0,3 à 1,2 mm on se fixe une incertitude inférieure à 25 micromètres.

Une méthode connue est la tomographie à rayons X. Cependant son temps d'opération présente l'inconvénient d'être long. Le contrôle d'une aube complète nécessiterait de réaliser des coupes successives de plusieurs minutes chacune à plusieurs hauteurs. Une telle solution n'est pas envisageable pour un contrôle systématique, et ce d'autant moins que les précisions de mesure exigées ne seraient pas respectées.

Une autre méthode, par ultrasons, ne convient pas non plus car les mesures sont fortement perturbées par l'anisotropie du matériau - les objectifs de précision ne seraient pas atteints - et par son caractère manuel. Elle est en outre sujette à des facteurs de variabilité tels que l'expérience de l'opérateur, l'étalonnage et la reproductibilité.

La technique de mesure par courants de Foucault convient bien pour une telle application, c'est-à-dire pour une pièce en matériau mono cristallin, et respecte les objectifs visés de précision des mesures. En particulier la conductivité des matériaux à température ambiante n'est pas influencée par l'orientation cristalline. Cependant il est nécessaire de tenir compte des caractéristiques géométriques particulières à ce type de pièce, car plusieurs paramètres perturbent la mesure :
- La courbure locale de l'aube,
- La présence de cloisons à proximité du point de mesure, et
- le positionnement relatif entre le détecteur et la pièce.

Ce dernier point peut être résolu par l'emploi d'une mécanique de précision suffisamment fiable.

Le présent demandeur a déjà développé un moyen de mesure permettant de supprimer les perturbations induites par la présence des cloisons. Un détecteur magnétique de forme en U appropriée a été réalisé qui émet dans une direction privilégiée. La demande de brevet EP 1167917 porte sur un procédé de mesure d'épaisseur d'une paroi d'aube creuse consistant à appliquer deux pôles magnétiques d'un détecteur de courants de Foucault sur la paroi en alignement parallèle aux cloisons les pôles étant munis de bobines reliées entre elles en série, à déplacer les détecteur sur la paroi perpendiculairement aux cloisons à enregistrer un signal produit par le détecteur et à en déduire l'épaisseur de la paroi d'après des étalonnages préliminaires. Ceux-ci sont effectués à partir de mesures sur des parois de référence comportant des cloisons. Par ailleurs ces étalonnages sont utilisés en apprentissage d'un réseau de neurones. Ce réseau de neurones, une fois convenablement paramétré par cet apprentissage fournit une évaluation de l'épaisseur de la paroi quand on lui applique en entrée un signal, tel que fourni par le détecteur et correspondant à l'impédance mesurée.

Un réseau de neurones artificiels est un modèle de calcul numérique effectué sur ordinateur inspiré du fonctionnement de vrais neurones biologiques. Comme cela est rappelé dans la demande de brevet ci-dessus, il est composé de neurones reliés entre eux par des entrées et des sorties. Un neurone artificiel N est plus précisément un processeur élémentaire relié à une ou plusieurs entrées e auxquelles sont associés des poids W et à une seule sortie s. La valeur en sortie dépend des entrées pondérées et d'un biais b, selon la formule s=f(w.e+b) où f est une fonction d'activation déterminée par la programmation du neurone N. Les données circulent ainsi dans le réseau en étant modifiées à chaque neurone qu'elles traversent. Les neurones sont répartis en couches successives et enchaînés aux neurones de la précédente et de la couche suivante.

Le modèle utilisé dans la demande ci-dessus est constitué d'une couche de sortie C2 à neurone unique fournissant la sortie souhaitée, l'épaisseur, et d'une couche cachée C1 composée de quelques neurone alimentés par des valeurs d'impédance, résistance et/ou réactance, obtenues du signal fourni par le détecteur de courant de Foucault. Les fonctions opérées par les neurones sont l'identité pour C2 : f(w.e+n) = w.e+b ; et la tangente hyperbolique : f(w.e+b) = tanh(w.e + b) dans la couche C1.

L'apprentissage est effectué sur une cale comprenant une plaque formée de bandes parallèles d'épaisseur croissante et munie sur l'arrière de nervures analogues aux cloisons. On applique le détecteur à courants de Foucault sur cette cale pour obtenir des signaux de référence correspondant aux impédances, et à partir desquels on définit et on ajuste les paramètres, poids et biais, du réseau de neurones. L'apprentissage peut être effectué par des algorithmes appropriés de façon que le réseau donne en sortie l'épaisseur connue en chaque point de la cale en fonction des signaux fournis par le détecteur.

Il reste cependant un dernier facteur dont il faut tenir compte dans le cas de pièce présentant des fortes courbures : il se forme un entrefer entre la surface plane du détecteur et la surface courbe de la pièce qui perturbe le signal mesuré ; il serait souhaitable de pouvoir s'en affranchir.

L'article « Wall thickness evaluation of single-crystal hollow blades by eddy current sensor » de Y. Le Bihan, P-Y. Joubert et D. Placko (NDT & E International 34 (2001) 363-368) mentionne que des cales tenant compte de la courbure étaient en développement.

Le déposant s'est maintenant fixé comme objectif de développer une méthode capable de prendre en compte l'effet de la courbure.

Conformément à l'invention, le procédé d'évaluation de l'épaisseur de paroi d'une pièce creuse, avec une surface courbe, de type aube de turbomachine au moins en un point présentant un rayon de courbure déterminés en ce point, comprenant la détermination de valeurs d'impédance d'un circuit électrique formé par un détecteur à courants de Foucault appliqué sur la paroi, et l'introduction de ces valeurs en entrée d'une unité de traitement numérique du type à réseau de neurones caractérisé par le fait que les paramètres du réseau ont été définis au préalable par apprentissage sur des cales de rayon de courbure déterminées dans l'intervalle des rayons de courbure de ladite surface et d'épaisseur déterminés. Chaque cale étant en forme de portion de cylindre avec un rayon égal à un rayon de courbure pris dans l'intervalle des rayons de courbure sur ladite pièce et avec une pluralité d'épaisseurs de paroi fonction des épaisseurs à mesurer.

L'invention s'applique en particulier à l'évaluation de l'épaisseur de paroi d'aube de turbomachine dont le rayon de courbure est supérieur ou égal à 10 mm et inférieur à 100 mm, avec une courbure pouvant être concave ou convexe selon que le capteur se trouve sur l'intrados ou sur l'extrados de l'aube.

Conformément à une autre caractéristique, le procédé est appliqué à l'évaluation de l'épaisseur de paroi d'aubes de turbomachine, ladite épaisseur étant comprise dans l'intervalle 0,1 mm et 2 mm...

Afin d'avoir à éviter de procéder à des correctifs qui seraient fonction de la nature du matériau, lesdites cales sont de préférence du même matériau que l'aube.

Conformément à une autre caractéristique le procédé étant appliqué à une pièce telle qu'une aube de turbomachine présentant des cloisons internes, on utilise un détecteur présentant un noyau magnétique en forme de U dont chaque branche est pourvue d'une bobine de mesure. Plus particulièrement, les branches du noyau ont un écartement au moins égal à celui desdites cloisons.

On décrit maintenant plus en détail l'invention en référence aux dessins annexés sur lesquels :
La figure 1 est une vue en coupe d'une aube de turbomachine pourvue de canaux internes pour la circulation d'un fluide refroidissement,
La figure 2 montre un exemple de détecteur utilisé pour la mesure de l'épaisseur de paroi par courants de Foucault,
Les figures 3 et 4 montrent un exemple de cale utilisée pour l'apprentissage du réseau de neurones, vue respectivement de face et en coupe de profil.

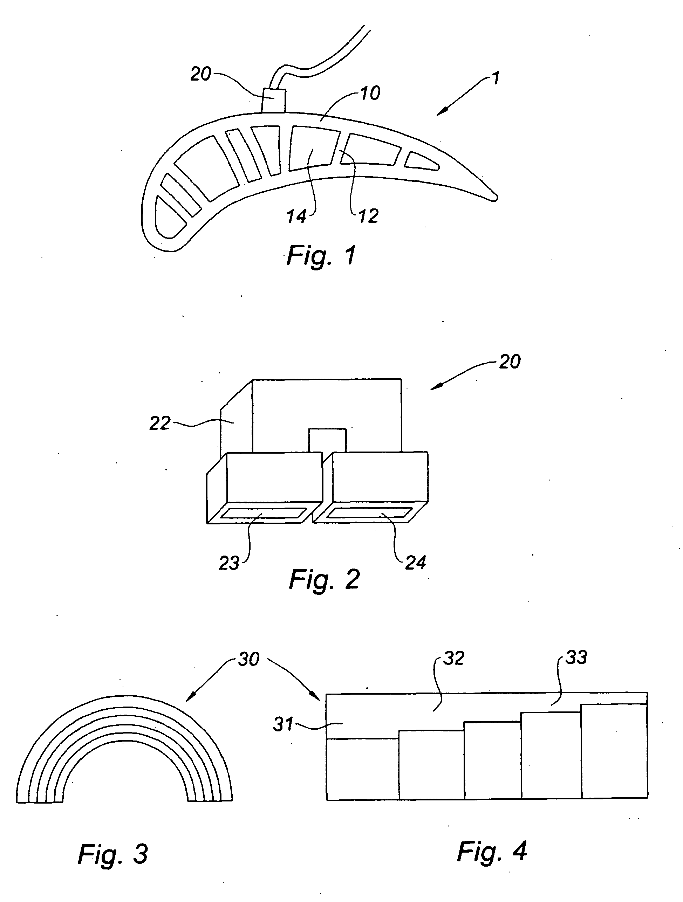

La figure 1 représente une aube creuse 1 dont la paroi extérieure 10 est courbe et qui comporte des cloisons internes 12 définissant notamment entre elles et les parois des canaux 14 de circulation d'air de refroidissement. La disposition et l'épaisseur ne sont pas les mêmes d'une cloison à l'autre. De nombreuses configurations sont possibles. Il en est de même de la courbure de la paroi qui varie plus ou moins fortement aussi bien le long de la corde de la pale qu'entre le pied et son extrémité libre. Comme cela l'a été expliqué plus haut il est important de pouvoir connaître en tout point l'épaisseur de la paroi de l'aube quand elle a été fabriquée par moulage.

Le procédé de l'invention vise à mesurer ou pour le moins permettre une évaluation de l'épaisseur des parois 10 en tout point,en appliquant la méthode de mesure par courants de Foucault. Cette méthode consiste à créer un circuit électrique avec un générateur de courants alternatifs un détecteur 20 approprié et un voltmètre pour enregistrer la tension produite aux bornes du détecteur. Le détecteur est disposé contre la paroi qui influe sur l'impédance du circuit électrique. Les valeurs mesurées par le voltmètre dépendent, au travers de l'impédance du circuit, des courants de Foucault que l'induction électromagnétique des bobines du détecteur produit sur la portion avoisinante de la pièce. Elles dépendent donc des caractéristiques de la paroi. Ces valeurs sont ensuite traitées pour en évaluer l'épaisseur.

Le détecteur 20 utilisé est de préférence du type tel que représenté sur la figure 2, et déjà mis en oeuvre dans le procédé décrit dans la demande de brevet EP 1167917 au nom du présent déposant. Il comprend un noyau magnétique de forte perméabilité 22, en forme de « U » et de section carrée ou rectangulaire. Deux bobines 23 et 24 sont placées sur les branches du noyau et sont reliées électriquement en série. Le détecteur émet ainsi dans une direction privilégiée et l'effet des cloisons est ainsi réduit.

La largeur du circuit magnétique entre les deux pôles est voisine ou supérieure à la largeur des cloisons. On déplace le détecteur 20 de façon ponctuelle sur les points de mesure et l'axe formé par les deux pôles en U est maintenu parallèle à la direction des cloisons.

La structure du capteur avec son circuit magnétique en « U » permet de créer un champ magnétique essentiellement parallèle à l'axe formé par les deux pôles du « U ». Comme cela ressort de l'enseignement du brevet ci-dessus, en orientant en chaque point de mesure les deux pôles du capteur parallèlement aux cloisons on obtient ainsi un signal peu perturbé par les cloisons car les courants de Foucault sont alors orthogonaux aux cloisons et pénètrent peu dans celles-ci. A contrario, un alignement orthogonal entraîne une forte sensibilité aux cloisons. On utilise ici, de préférence, ce capteur dans son mode « parallèle ». On améliore, si cela est nécessaire, la précision de l'estimation en disposant de cales courbes avec cloisons comme cela est expliqué plus loin.

Des essais ont été effectué avec un capteur de pôles carrés de 1mm par 1mm, avec un écartement entre pôles de 1mm.

On observera cependant que dans la mesure où la présente invention s'applique à la détermination d'épaisseurs de parois présentant un certain rayon de courbure mais pas nécessairement des cloisons sous-jacentes, l'utilisation de tout autre détecteur entre également dans le cadre de l'invention.

Pour assurer le balayage de tous les points de mesure et la perpendicularité du détecteur, avec précision et fiabilité par rapport à la surface à mesurer le détecteur est de préférence supporté par une mécanique multiaxe, notamment cinq. Le balayage est avantageusement point par point. En chaque point le signal est enregistré puis le détecteur se déplace sur le point de mesure suivant.

Si la tension mesurée par le voltmètre est V et l'intensité du courant passant par les bobines est I on a alors la relation Z₀= V₀/I₀+ R₀+jX₀ où Z₀ est l'impédance, R₀ la résistance et X₀ la réactance du circuit en l'absence de pièce et j²=1. On a de la même façon Z_{c}=V_{c}/I_{c}= R_{c}+jX_{c} quand le détecteur est appliqué sur la pièce.

L'épaisseur est estimée par un moyen de traitement numérique avec modèle inverse. Par modèle inverse, on désigne un modèle mathématique qui d'une manière très générale lie la conséquence à la cause contrairement à un modèle direct qui va de la cause vers la conséquence. Dans la présente application le modèle inverse fournit l'épaisseur de paroi (la cause) à partir de l'impédance (qui est une conséquence de l'épaisseur, et d'autres paramètres de l'aube). Ce type de modèle est connu pour résoudre des problèmes d'estimation de paramètres à partir de mesures. Il peut être créé au moyen d'une base de données comme cela est fait ici. Ce modèle a pour données d'entrée l'impédance du détecteur, de préférence l'impédance normalisée, et pour sortie l'épaisseur estimée.

Le modèle inverse est donc une fonction mathématique, avantageusement un réseau de neurones ou un modèle polynomial dont les paramètres sont réglés à partir de données courants de Foucault issues de mesures effectuées sur des cales qui couvrent les plages d'épaisseur et de courbures recherchées.

On a représenté, sur les figures 3 et 4, une cale 30 utilisée pour l'apprentissage du réseau de neurones. La cale 30 est en forme de portion de cylindre, de demi cylindre notamment, à section circulaire dont le rayon figure un rayon de courbure et qui a été choisi à l'intérieur de l'intervalle des rayons de courbures sur l'aube. La paroi de la cale est formée d'une pluralité d'épaisseurs 31, 32, 33 etc. L'épaisseur croît par palier le long de son axe. Les épaisseurs sont également choisies en fonction de l'intervalle des épaisseurs à mesurer. Les cales sont utilisées en position concave et convexe. Avantageusement, le matériau constituant les cales est le même que celui des pièces à mesurer ou au moins de même conductivité. Cependant, rien ne s'oppose à ce que les mesures soient faites sur des cales ayant une conductivité différente que les pièces. En effet l'impédance normalisée, telle que définie dans le brevet ci-dessus, ne dépend que de σ et f sous la forme d'un produit. La compensation d'un écart de conductivité peut alors être réalisée en modifiant la fréquence d'acquisition sur la cale par rapport à celle qui est utilisée ensuite sur la pièce.

On procède à l'apprentissage du réseau de neurones en mesurant des valeurs fonction de l'impédance du circuit dans lequel est incorporé le détecteur ; ce circuit est modifié par les courants de Foucault engendrés dans la pièce qui eux-mêmes dépendent des épaisseurs des cales. La connaissance des épaisseurs de la cale permet d'en déduire les valeurs des paramètres du réseau par un algorithme itératif approprié. Cet algorithme est basé par exemple sur le calcul du gradient de l'écart (erreur) entre l'épaisseur fournie par le réseau de neurones et l'épaisseur réelle de la cale au point de mesure considéré.

Le capteur pris avec un alignement parallèle aux cloisons présente une faible sensibilité à celles-ci. Il n'est alors pas indispensable de disposer de cales présentant des cloisons pour l'étalonnage du capteur. L'utilisation de cales en forme de demi cylindres est donc suffisante. Des cales avec cloisons, par exemple des aubes convenablement découpées et caractérisées métrologiquement permettent cependant d'accroître la précision de mesure si cela est nécessaire. Le modèle inverse apprend et corrige au moins partiellement l'effet des cloisons qui est faible mais non nul. Pour améliorer encore les performances, on utilise le capteur avec un alignement orthogonal aux cloisons en complément du mode précédent. Il permet au réseau de neurones, grâce à l'influence très différente des cloisons dans ces deux modes, d'identifier et de corriger l'effet des cloisons après étalonnage sur des cales courbes avec cloisons.

## Revendications

1. Procédé d'évaluation de l'épaisseur de paroi d'une pièce creuse avec une surface courbe de type aube de turbomachine au moins en un point présentant un rayon de courbure et une épaisseur déterminés en ce point, comprenant la détermination de valeurs d'impédance d'un circuit électrique formé par un détecteur (20) à courants de Foucault appliqué sur la paroi, et l'introduction de ces valeurs en entrée d'une unité de traitement numérique du type à réseau de neurones **caractérisé par le fait que** les paramètres du réseau ont été définis au préalable par apprentissage sur des cales de rayon de courbure déterminé dans l'intervalle des rayons de courbure de ladite surface et d'épaisseur déterminés, chaque cale étant en forme de portion de cylindre avec un rayon égal à un rayon de courbure pris dans l'intervalle des rayons de courbure sur ladite pièce et avec une pluralité d'épaisseurs de paroi fonction de l'intervalle des épaisseurs à mesurer.

2. Procédé selon la revendication précédente pour l'évaluation de l'épaisseur de paroi d'aube de turbomachine dont le rayon de courbure est supérieur ou égal à 10 mm et inférieur à 100 mm avec une courbure pouvant être concave ou convexe.

3. Procédé selon la revendication 1 ou 2 pour l'évaluation de l'épaisseur de paroi d'aube de turbomachine, ladite épaisseur étant comprise dans l'intervalle 0,1 mm et 2 mm.

4. Procédé selon la revendication 1, 2 ou 3 lesdites cales étant de même matériau que l'aube.

5. Procédé selon l'une des revendication 1 à 3 lesdites cales n'étant pas de même matériau que l'aube, une méthode de correction de l'effet d'une différence de conductivité électrique étant appliquée.

6. Procédé selon l'une des revendications précédentes, appliqué à une pièce telle qu'une aube de turbomachine présentant des cloisons internes, selon lequel on utilise un détecteur présentant un noyau magnétique en forme de U dont chaque branche est pourvue d'une bobines de mesure.

7. Procédé selon la revendication précédente dont les branches du noyau ont un écartement au moins égal à celui desdites cloisons.

## Patentansprüche

1. Verfahren zur Beurteilung der Wandstärke eines Hohlteils mit einer gekrümmten Oberfläche des Typs Turbomaschinenschaufel an mindestens einer Stelle, die an dieser Stelle einen bestimmten Krümmungsradius und eine Stärke aufweist, das das Bestimmen von Impedanzwerten einer elektrischen Schaltung umfasst, die aus einem Detektor (20) mit foucaultschen Strömen gebildet ist, der auf der Wand angewandt wird, und Eingabe dieser Werte am Eingang einer numerischen Verarbeitungseinheit des Typs neurales Netz, **gekennzeichnet durch** die Tatsache, dass die Parameter des Netzes zuvor **durch** Lernen auf Keilen mit festgelegtem Krümmungsradius in dem Bereich der Krümmungsradien der Oberfläche und mit festgelegten Stärken definiert wurden, wobei jeder Keil die Form eines Zylinderabschnitts mit einem Radius gleich einem Krümmungsradius hat, der in dem Intervall der Krümmungsradien auf dem Teil genommen wird, und mit mehreren Wandstärken in Abhängigkeit von dem Intervall der zu messenden Stärken.

2. Verfahren nach dem vorhergehenden Anspruch zur Beurteilung der Wandstärke einer Turbomaschinenschaufel, deren Krümmungsradius größer oder gleich 10 mm und kleiner als 100 mm mit einer Krümmung ist, die konkav oder konvex sein kann.

3. Verfahren nach Anspruch 1 oder 2 zur Beurteilung der Wandstärke einer Turbomaschinenschaufel, wobei die Stärke in dem Bereich von 0,1 mm und 2 mm liegt.

4. Verfahren nach Anspruch 1, 2 oder 3, wobei die Keile aus demselben Werkstoff bestehen wie die Schaufel.

5. Verfahren nach einem der Ansprüche 1 bis 3, wobei die Keile nicht aus demselben Werkstoff bestehen wie die Schaufel, wobei ein Korrekturverfahren des Effekts eines Unterschieds der elektrischen Leitfähigkeit angewandt wird.

6. Verfahren nach einem der vorhergehenden Ansprüche, angewandt an ein Teil wie eine Turbomaschinenschaufel, das Innenwände aufweist, wobei man einen Detektor verwendet, der einen Magnetkern in U-Form aufweist, von dem jeder Schenkel mit einer Messspule versehen ist.

7. Verfahren nach dem vorhergehenden Anspruch, wobei die Schenkel des Kerns einen Abstand mindestens gleich dem der Wände haben.

## Claims

1. A method for evaluating the wall thickness of a hollow part, with a curved surface, of the turbomachine blade type, at least at a point having a determined radius of curvature and thickness at this point, comprising the determination of impedance values of an electrical circuit formed by an eddy current detector (20)applied to the wall, and the insertion of these values into a digital processing unit of the neural network type, wherein the network parameters have been defined in advance by learning on spacers having a determined radius of curvature in the range of the radii of curvature of said surface and a determined thickness, each spacer having the shape of a portion of a cylinder with a radius equal to a radius of curvature taken within the range of the radii of curvature on said part and with a plurality of wall thicknesses chosen according to the range of thicknesses to be measured.

2. The method as claimed in the preceding claim for evaluating the wall thickness of a turbomachine blade whose radius of curvature is greater than or equal to 10 mm and less than 100 mm with a curvature that may be concave or convex.

3. The method as claimed in claim 1 or 2 for evaluating the wall thickness of a turbomachine blade, said thickness lying in the range 0.1 mm and 2 mm.

4. The method as claimed in claim 1, 2 or 3, said spacers being of the same material as the blade.

5. The method as claimed in one of claims 1 to 3, said spacers not being of the same material as the blade, a method of correcting the effects of a difference in electrical conductivity being applied.

6. The method as claimed in one of the preceding claims, applied to a part such as a turbomachine blade having internal partitions, whereby a detector is used having a U-shaped magnetic core of which each branch is provided with a measurement oil.

7. The method as claimed in the preceding claim, wherein the branches of the core have a spacing at least equal to that of said partitions.
